# EUROPEAN PATENT SPECIFICATION

(11) **EP 2 230 350 B1**
(45) Date of publication and mention of the grant of the patent: **13.04.2011**
(21) Application number: 09003912.4
(22) Date of filing: 18.03.2009
(51) Int. Cl.: D06M 10/00, D01F 6/06, D01F 6/04, C04B 16/06

(54) **Polymer fiber, its use and process for its manufacture**
Polymerfaser, deren Verwendung und Verfahren zu deren Herstellung
Fibre polymère, son utilisation et son procédé de fabrication

(43) Date of publication of application: 22.09.2010
(73) Proprietor: baumhueter extrusion GmbH, 33378 Rheda-Wiedenbrück (DE)
(72) Inventor: Knack, Ingo, Dr., 21493 Schwartzenbek (DE)
(74) Representative: Teipel, Stephan

(56) References cited:
- EP-A- 0 799 839
- WO-A-00/40789
- WO-A-01/48041
- GB-A- 823 348
- JP-A- 4 041 769
- US-B1- 6 171 443
- MARTINEZ-BERRERA ET AL.: "Mechanical Improvement of Concrete by Irradiated Polypropylene Fibers" POLYMER ENGINEERING AND SCIENCE, vol. 45, no. 10, 25 August 2005 (2005-08-25), pages 1426-1431, XP002536094
- MARTINEZ-BARRERA ET AL.: "Concrete reinforced with irradiated nylon fibers" J.MATER.RES., vol. 21, no. 2, February 2006 (2006-02), pages 484-491, XP002536095
- DATABASE WPI Week 199239 Thomson Scientific, London, GB; AN 1992-319074 XP002536128 & JP 04 222206 A (SHOWA DENKO KK) 12 August 1992 (1992-08-12)

## Description

The present invention relates to a polymer fiber obtainable by melt-spinning of a polymer, the use of the fiber and a process for the manufacture of the fiber.

The use of polymer fibers as a reinforcement for cement, plaster, mortar, concrete, etc. is well-known in the art, e.g. from EP-A-0 225 404, EP-A-0 235 577, and EP-A-0 448 577. The materials, cement paste, mortar or concrete, although capable of great strength in compression, are weak in tension, have low strain at failure and are generally quite brittle. Fibers have therefore been introduced to overcome some of these weaknesses, and to develop products which otherwise would not be possible. Polymer fibers turned out to be particularly suitable in these applications, because they have good chemical resistance, are unaffected by moisture, have high tensile strength and elongation at break with low specific gravity, and can be easily handled.

Fire resistance of concrete can be of great importance especially in the field of tunnel construction. If a fire occurs in a tunnel as a result of a car accident for example, temperatures rise rapidly to 1000°C and more. The temperature of the outer layers of the wall inside the tunnel increase accordingly. Since concrete contains water, the water starts to evaporate within a short period of time. However, the steam is not able to escape quickly enough from the inside of the concrete structure and therefore the pressure increases enormously. If the pressure inside the concrete is beyond the tensile strength of concrete, the outer layers will start chipping off and the heat can expand even more quickly to the innermost of the concrete. If the steel reinforcement is reached by the heat, its stability is lost also very quickly. By such means there is a high danger of collapse of the tunnel. The degree of damage due to parts of the concrete chipping off increases accordingly to the content of water in the concrete. A dense and compact structure of the concrete furthermore hinders the steam to escape. The chipping off of material is a well known problem in the fire resistance industry. Analogue problems appear with refractory material such as ovenware. Since the structure of the concrete is significantly weakened by the explosive chipping off of parts on the surface on the concrete, the chipping off has to be avoided as far as possible to reduce the occurring damage.

While polymer fiber reinforcements are known to increase the fire resistance of concrete, cement, etc. there is still a need for further improved products, in particular with respect to improve the fire resistancy.

It has now surprisingly been found that the fire resistance of products from cement, mortar, concrete or other refractory material is further increased if the melt flow index (MFI) of the polymer fiber is increased. While it is not intended to be bound to any theory it is believed that this can probably be explained by the formation a capillary network or a porous system inside the concrete when the polypropylene fibers melt due to increasing temperatures. As a result, the concrete gets permeable for the water steam and the pressure inside the concrete is reduced to the effect of lowering or avoiding chipping off.

If the MFI value of the polymer fiber is increased a thin fluid polymer melt forms which can be absorbed more easily by the concrete matrix and results in an earlier and higher permeability through the forming capillars.

Polymer fibers used in reinforcement applications are commonly manufactured by melt-spinning. However, in a melt-spinning process the specific properties of the polymer material must be taken into account. Important melt-spinning process parameters, and consequently of importance to the property profile of the fibers to be produced, are molecular weight, melt flow index and raw material molecular weight distribution. In particular, if the MFI of the polymer is too low, its viscosity becomes too high for the melt-spinning process. On the other hand, if the MFI value is too high, the viscosity of the polymer becomes so low that the fiber cannot be drawn from the nozzle orifice. Therefore, high demands are made on the quality of the raw material regarding the rheological properties of the polymer melt due to the melt-spinning process. As a result thereof the MFI value of polymers suitable for the preparation of fibers by melt-spinning must be in a certain narrow range of above 5 g/10 min to about 40 g/10 min.

On the other hand, for a number of applications, such as additives for reinforcing cement, mortar, concrete, plaster, etc. it would be desirable to use polymer fibers having a MFI value higher than the MFI value of polymers being useful for melt-spinning processes.

To overcome this and other above-described problems of the prior art it has now surprisingly been found that the properties of polymer fibers obtainable by melt-spinning can be tailored for each application by treating the melt-spun fibers with ionizing radiation.

Thus, the present invention relates to a polymer fiber obtainable by melt-spinning of a polymer, characterized in that subsequent to the melt-spinning step the fiber is treated with ionizing radiation.

The polymer used in the preparation of the fiber of the present invention is polypropylene homopolymer, a polypropylene copolymer, or a mixture of any of these.

The polymer used in the preparation of the fiber can contain further polymers as well as additives, such as colourants, glidents, spinning additives, functional copolymers, low molecular weight polypropylene, polypropylene waxes, atactic polypropylene, reactive components, thermostabilizers, UV stabilizers, etc. The additives can be selected by a person skilled in the art according to the specific requirements of the melt-spinning process as well as the intended use of the final fibers.

The preparation of fibers by melt-spinning is known to a person skilled in the art. The process is described, for example, by B. von Falkai, Synthesefasern, Grundlagen, Technologie, Verarbeitung und Anwendung, Verlag Chemie, Weinheim 1981. In the melt-spinning process the properties of the polymer are generally not altered. Thus, for example the MFI value of the fibers obtained in this process is the same as the MFI value of the polymer granules used as starting material. Therefore, the MFI value of polymer fibers obtained by melt-spinning necessarily is in the same range as the MFI value of those polymers which are suitable for the melt-spinning process, i.e. the MFI is in the range of above 5 g/10 min to about 40 g/10 min.

According to the invention the rheological properties of the polymer fibers obtained in the melt-spinning process is tailored according to the requirements of the intended use of the fibers by treating the fibers with ionizing radiation. Preferably the ionizing radiation is a gamma or beta radiation.

The gamma- and beta-ray treatment is carried out by means of irradiation procedures known in the art. Beta-rays, also known as electron beams, are generated by electron accelerators generally known in the art. Gamma-rays used in industrial applications are generally generated in the radioactive conversion of cobalt 60 (⁶⁰Co) to nickel 60 (⁶⁰Ni). The thereby emitted gamma-rays have a high penetration depth. While the time of irradiation with beta-rays is generally within seconds, the time of irradiation with gamma-rays can be within hours. The radiation dose applied on the polymer fibers according to the invention is not particularly limited but normally in the range of about 10 kGy to about 300 kGy (kilo Gray), preferably about 30 kGy to about 160 kGy.

By the treatment with ionizing radiation the rheological properties of the polymer fiber are altered. For example the MFI value of the polymer fiber, depending on the polymer used for the preparation of the fiber, is increased or decreased. For example in case of polypropylene the MFI is increased due to bond cleavage of the polymer chain. Accordingly, other properties of the polymer fiber, such as the average molecular weight of the polymer and/or the molecular weight distribution of the polymer are altered and, thus, can be tailored according to the requirements of the intended use of the fibers.

Of particular relevance for the polymer fibers of the present invention is the MFI (melt flow index) value, also designated as melt flow rate (MFR). The MFI value of the polymer fibers is measured according to DIN EN ISO 1133. According to this definition the standard measurement conditions for measuring the MFI are 230°C/2.16 kg for polypropylene. The unit for the MFI is g/10 min and it is measured by means of a capillary rheometer, whereby the material, i.e. the polymer, is melted in a cylinder form and pressed through a defined nozzle with a certain pressure. Then the emerged mass of the polymer melt is detected as a function of time. Since the polymer fibers are melted for determing their MFI value the MFI of the polymer fiber is equal to the MFI of the polymer of the fiber, i.e. the polymer including any additives or mixtures with other polymers, if present.

MFI values of the polymer fiber according to the invention made from polypropylene, whether as a homopolymer or a copolymer or a mixture thereof, are higher than 500 g/10 min, in particular higher than about 1000 g/10 min.

The present invention furthermore provides a polypropylene fiber obtainable by melt-spinning, characterized in that the fiber has an MFI of more than 500 g/10 min or even more than about 1000 g/10 min. The fiber has a length in the range of 0,1 to 40 mm, and a diameter in the range of 5 to 170 µm. This fiber is prepared from a polymer containing polypropylene as described above. The polypropylene can be a homopolymer or a copolymer or a mixture thereof. After the melt-spinning step the MFI of the obtained fiber is increased by treatment with ionizing radiation as described above.

Another aspect of the present invention is the provision of a process for the manufacture of a polymer fiber comprising the steps of melt-spinning of a polymer and subsequent treatment of the fiber with ionizing radiation. In this process the fiber is obtained either as a continuous strand or the strand is cut into pieces. The treatment with ionizing radiation can be carried out directly after the fiber is formed, for example before, during or after the fiber is stretched, but before it is cut into pieces or after it is cut into pieces. It is also possible that after the continuous fiber strand or the cut fiber pieces are obtained, these are stored for some time and the step of treatment with an ionizing radiation is carried out at a later time.

In a further aspect of the invention the polymer fiber is used as an additive in concrete, mortar, plaster, cement or refractory material. By means of the treatment with ionizing radiation of the polymer fibers, in particular polypropylene fibers of the present invention, their melt viscosity can be decreased significantly. As a result thereof, when used as additive in cement, etc. they facilitate the early formation of the above-described capillary system when the cement is heated, for example in a fire, and the water steam can therefore escape already at relatively low temperatures and pressures. As a result, the chipping off is reduced significantly to the effect that the stability of the cement or concrete product, such as a tunnel, is maintained for a longer period of time compared with the use of untreated polypropylene fibers as additive.

In experimental tests a significantly improved effect of fire resistance was proved using the fibers according to the invention. The fibers according to the invention were compared with standard polypropylene fibers in a fire test using the same amount of fibers of the same geometry as additive in concrete samples. As a result, the samples containing fibers according to the invention showed significantly fewer chipping off than those containing the standard polypropylene fibers not treated with ionizing radiation.

Furthermore, a polypropylene fiber having a MFI of more than 500 g/10 min, such as of more than about 1000 g/10 min is used as an additive in concrete, mortar, plaster, cement or refractory material. This polypropylene fiber is a fiber as described above.

The present invention also provides a concrete, mortar, plaster, cement or refractory material containing a polypropylene fiber as described above.

The diameter of the polymer fiber according to the invention used in concrete according to the invention is from about 5 µm to about 170 µm, more preferably from about 12 µm to about 50 µm and most preferably about 15 µm.

The length of the polymer fibers according to the invention used in the concrete according to the invention is from about 0.1 mm to about 40 mm, preferably such as from about 2 mm to about 20 mm, more preferably from about 4 mm to about 8 mm and most preferably about 6 mm.

In the concrete, according to the invention, preferably less than about 2 kg of the polymer fiber according to the invention is present in 1 m³ of the concrete. Preferred ranges of the amount of the polymer fiber according to the invention used in 1 m³ of concrete are about 0.1 kg to about 1.5 kg, more preferably about 0.1 kg to about 1.0 kg. Higher amounts than about 2 kg of the polymer fiber negatively affect the stability of the concrete. However, not only the amount of the polymer fiber in the concrete is important but also the diameter and the length of the fiber. Different diameters of the polymer fiber at a given amount of fiber result in a different number of polymer fibers present in the concrete which affects the properties of the concrete. Therefore, an appropriate combination of the parameters is required.

The present invention will now be further illustrated by the examples which are not intended to be construed as limiting.

### Examples

### Beta-ray treatment of Polypropylene (PP) Fibers:

A PP fiber sample of the type PB Eurofiber CUT F-1763 with 1.7 dtex (corresponding to a diameter of about 15 µm), manufactured from baumhueter extrusion GmbH was treated with beta-rays at a dose of 132 kGy. Then its MFI value was measured. Before beta-ray treatment, the MFI value was 40 g/10 min (the untreated fiber sample labelled in the following as "U" was used as comparative sample in the experiments). After treatment, the MFI value was >1200 g/10 min (the treated fiber sample is labelled in the following as "T"). The MFI measurements were carried out according to DIN EN ISO 1133 under standard conditions, namely 230°C/2.16 kg.

### Fire tests:

With both fiber samples, concrete samples were prepared and fire tests were carried out. The concrete samples were prepared using a typical concrete composition for tunnel construction. The following amounts were calculated for a volume of 35 L:

| | |
|---|---|
| Water: | 6.3 kg |
| Sand: | 19.5 kg |
| Split: | 43 kg |
| Cement: | 11.2 kg |
| Flue ash: | 2.8 kg |

Test samples were prepared from the resulting concrete mixture with different amounts of PP fibers and filled into a cubic steel form with 10 cm length of the edge. The concrete samples were cured 1 day in the steel form and then stored 7 days in water before the fire tests were carried out. In the fire tests the samples were put into an oven at 1100°C for 5 minutes. After cooling, the volume of the chipped off pieces was measured. The results are summarized in the following table 1:

**Table 1**

| Added amount of fibers to the concrete (kg/m³) | Fiber | Volume of the chipped off pieces (cm³) | Cipping off (%) based on the concrete without addition of fibers |
|---|---|---|---|
| 0 | - | 27 | 100 |
| 0,25 | U | 23 | 85 |
| 0,25 | T | 13 | 48 |
| 0,5 | U | 16 | 59 |
| 0,5 | T | 5 | 19 |
| 0,75 | U | 12 | 44 |
| 0,75 | T | 3 | 11 |

The above results demonstrate that the amount of chipped off pieces of the concrete containing irradiated PP fibers (T) according to the invention is significantly smaller than with untreated PP fibers (U). As can be seen, the amount of chipped off pieces of the concrete samples according to the invention is about % to ¼ of the amount of chipped off pieces of the concrete samples containing prior art fibers.

## Claims

1. Polymer fiber obtainable by melt-spinning of a polymer and subsequent treatment of the fiber with ionizing radiation, wherein the polymer is a polypropylene homopolymer, a polypropylene copolymer or a mixture thereof, the polymer fiber has a length in the range of 0.1 to 40 mm, a diameter in the range of 5 to 170 µm and an MFI of more than 500 g/10 min, measured according to DIN EN ISO 1133 at 230°C/2,16 kg.

2. Process for the manufacture of a polymer fiber according to claim 1 comprising the steps of melt-spinning of a polymer and subsequent treatment of the fiber with ionizing radiation.

3. Use of a polymer fiber according to claim 1 as an additive in concrete, mortar, plaster, cement or refractory material.

4. Use of a polymer fiber according to claim 1 to improve the fire resistance of concrete, mortar, plaster, cement or refractory material.

5. Concrete, mortar, plaster, cement or refractory material containing a polymer fiber according to claim 1.

## Patentansprüche

1. Polymerfaser, erhältlich durch Schmelzspinnen eines Polymers und anschließende Behandlung der Faser mit ionisierender Strahlung, wobei das Polymer ein Polypropylenhomopolymer, ein Polypropylencopolymer oder ein Gemisch davon ist, wobei die Polymerfaser eine Länge im Bereich von 0,1 bis 40 mm, einen Durchmesser im Bereich von 5 bis 170 µm und einen MFI von mehr als 500 g/10 min, gemessen nach DIN EN ISO 1133 bei 230 °C/2,16 kg, hat.

2. Verfahren zur Herstellung einer Polymerfaser nach Anspruch 1, umfassend die Schritte des Schmelzspinnens eines Polymers und die anschließende Behandlung der Faser mit ionisierender Strahlung.

3. Verwendung einer Polymerfaser nach Anspruch 1 als ein Additiv in Beton, Mörtel, Putz, Zement oder feuerfestem Material.

4. Verwendung einer Polymerfaser nach Anspruch 1 zur Verbesserung der Feuerbeständigkeit von Beton, Mörtel, Putz, Zement oder feuerfestem Material.

5. Beton, Mörtel, Putz, Zement oder feuerfestes Material, enthaltend eine Polymerfaser nach Anspruch 1.

## Revendications

1. Fibre polymère susceptible d'être obtenue par filage en fusion d'un polymère suivi d'un traitement de la fibre avec un rayonnement ionisant, dans laquelle le polymère est un homopolymère de polypropylène, un copolymère de polypropylène ou un mélange de ceux-ci, la fibre polymère a une longueur dans la plage de 0,1 à 40 mm, un diamètre dans la plage de 5 à 170 µm et un MFI de plus de 500 g/10 min, mesurés selon la norme DIN EN ISO 1133 à 230 °C/2,16 kg.

2. Procédé pour la fabrication d'une fibre polymère selon la revendication 1, comprenant les étapes de filage en fusion d'un polymère suivi du traitement de la fibre avec un rayonnement ionisant.

3. Utilisation d'une fibre polymère selon la revendication 1 comme additif dans le béton, le mortier, le plâtre, le ciment ou un matériau réfractaire.

4. Utilisation d'une fibre polymère selon la revendication 1 pour améliorer la résistance au feu du béton, du mortier, du plâtre, du ciment ou d'un matériau réfractaire.

5. Béton, mortier, plâtre, ciment ou matériau réfractaire contenant une fibre polymère selon la revendication 1.
